# EUROPÄISCHE PATENTSCHRIFT

(11) **EP 1 694 542 B1**
(45) Veröffentlichungstag und Bekanntmachung des Hinweises auf die Patenterteilung: **15.07.2009**
(21) Anmeldenummer: 04790030.3
(22) Anmeldetag: 22.10.2004
(51) Int. Cl.: B60T 8/17

(54) **FAHRDYNAMIKREGELUNG MIT VORGEZOGENEM DRUCKAUFBAU AM ZU REGELNDEN RAD**
DRIVING DYNAMICS CONTROL SYSTEM FEATURING EARLY PRESSURE BUILD-UP ON WHEEL THAT IS TO BE CONTROLLED
SYSTEME DE REGLAGE DE LA DYNAMIQUE DE CONDUITE POUR UN VEHICULE AUTOMOBILE COMPRENANT UNE MONTEE EN PRESSION ANTICIPEE POUR LA ROUE A REGLER

(30) Priorität: 03.12.2003 DE 10356510
(43) Veröffentlichungstag der Anmeldung: 30.08.2006
(73) Patentinhaber: ROBERT BOSCH GMBH, 70442 Stuttgart (DE)
(72) Erfinder: Nimmo, Matthew, 71368 Ludwigsburg (DE); Hey, Matthias, 97084 Würzburg (DE)
(86) Internationale Anmeldenummer: PCT/DE2004/002357
(87) Internationale Veröffentlichungsnummer: WO 2005/054022

(56) Entgegenhaltungen:
- DE-A1- 10 054 647
- DE-A1- 10 119 907
- US-A- 6 149 251

## Beschreibung

Die Erfindung betrifft ein Verfahren zur Fahrdynamikregelung in kritischen Fahrsituationen gemäß dem Oberbegriff des Patentanspruchs 1, sowie eine entsprechende Vorrichtung gemäß dem Oberbegriff des Patentanspruchs 8.

Fahrdynamikregelungen dienen dazu, den Fahrer in kritischen Fahrsituationen zu unterstützen und das Fahrzeug automatisch wieder zu stabilisieren. Bekannte Fahrdynamikregelungssysteme, wie z.B. ESP (elektronisches Stabilitätsprogramm) oder ROM (Roll-Over-Mitigation) bedienen sich dabei üblicherweise der Fahrzeugbremsen oder der Motorsteuerung als Stellglieder, um in den Fahrbetrieb einzugreifen. Andere Systeme nutzen z.B. auch ein aktives Feder/Dämpfer-System (Normalkraftverteilungssystem) oder eine aktive Lenkung.

Eine Fahrdynamikregelung, wie z.B. ESP, regelt meist die Giergeschwindigkeit des Fahrzeugs, d.h. die Drehung des Fahrzeugs um die Hochachse. Beim Übersteuern oder Schleudern eines Fahrzeugs ist die Giergeschwindigkeit höher als sie nach den Fahrervorgaben (Lenkradwinkel, Gaspedalstellung, Bremsbetätigung) sein sollte. Um das Fahrzeug zu stabilisieren, berechnet der Regelalgorithmus ein Ausgleichs-Giermoment, das durch Ansteuerung ausgewählter Radbremsen umgesetzt wird. Dabei gibt der Regleralgorithmus üblicherweise ein Bremsmoment in Form von Sollschlupf für einzelne Räder vor, der mit Hilfe eines Bremsschlupfreglers eingestellt wird.

Um bei Übersteuern ein geeignetes Ausgleichs-Giermoment einzustellen, eignet sich vor allem das kurvenäußere Rad. Dieses Rad hat einen zum Fahrzeugschwerpunkt günstigen Hebelarm und kann aufgrund einer typischen Fahrwerkauslegung auch eine hohe Kraft absetzen.

Fahrdynamikregelungssysteme mit einer Kippstabilisierungsfunktion, wie z.B. ROM, greifen mit Bremseingriffen ebenfalls typischerweise auf das kurvenäußere Vorderrad zu. Dieses Rad ist zumeist hoch belastet und trägt dadurch stark zum Aufbau einer hohen und eventuell kritischen Querbeschleunigung bei.

Bei hochdynamischen Manövern wie zum Beispiel Spurwechsel- oder Fishhook-Manöver gerät das Fahrzeug typischerweise beim ersten Gegenlenken in einen kritischen Fahrzustand. Hier kann einerseits eine hohe Querbeschleunigung auftreten, bei denen vor allem Fahrzeuge mit hohem Schwerpunkt in einen kippkritischen Bereich gelangen können. Andererseits kann es zu diesem Zeitpunkt auch zum starken Übersteuern kommen. Ein Bremsmomenteneingriff am kurvenäußeren Vorderrad hilft demnach bei hochdynamischen Manövern sowohl gegen das Kippen als auch gegen das Übersteuern.

Bekannte Fahrdynamikregelungen greifen i.d.R. dann in den. Fahrbetrieb ein, wenn die Regelabweichung der Giergeschwindigkeit eine vorgegebene Anregelschwelle überschreitet. Bei Überschreiten der Anregelschwelle werden eine Stellanforderung an das hydraulische Bremssystem, bzw. eine Hydraulikpumpe des Bremssystems, ausgegeben und verschiedene Ventile eines Hydroaggregats vom Steuergerät angesteuert.

Aufgrund verschiedener verzögernde Ursachen, wie z.B. dem Hochlaufen der Hydraulikpumpe auf die Solldrehzahl oder dem Befüllen der Bremse mit Bremsflüssigkeit, etc., kann sich der Bremsdruck jedoch nur mit einem endlichen Gradienten aufbauen, so dass das gewünschte Soll-Bremsmoment erst nach einer vorgegebenen, vom Bremssystem abhängigen Zeitdauer anliegt. Diese Verzögerungszeit kann dazu führen, dass Fahrzeuge, insbesondere bei hochdynamischen Manövern, ins Schleudern geraten und nicht ausreichend schnell stabilisiert werden können. Gerade bei Fahrzeugen mit hohem Schwerpunkt, wie z.B. Transportern oder SUVs (Sports Utility Vehicles) kann das verzögerte Ansprechverhalten des Bremssystems dazu führen, dass sehr hohe Querbeschleunigungen auftreten, die das Fahrzeug zum Umkippen bringen.

Das Dokument DE 10054647 offenbart ein Verfahren sowie ein System zur Fahrzeugsstabilisierung gemäß dem Oberbegriff der Ansprüche 1 und 7.

Es ist daher die Aufgabe der vorliegenden Erfindung, ein Fahrdynamikregelungssystem derart zu verbessern, dass Fahrzeuge in kritischen Fahrsituationen schneller stabilisiert und am Umkippen gehindert werden können.

Gelöst wird diese Aufgabe gemäß der Erfindung durch die im Patentanspruch 1 sowie im Patentanspruch 7 angegebenen Merkmale. Weitere Ausgestaltungen der Erfindung sind Gegenstand von Unteransprüchen.

Ein wesentlicher Aspekt der Erfindung besteht darin, das Bevorstehen eines automatischen Bremseingriffs an einem Rad schon vor dem Auslösen des eigentlichen Regeleingriffs zu erkennen und an diesem Rad einen geringen Vorbereitungs-Bremsdruck aufzubauen. Dadurch, dass bereits vor dem eigentlichen Regeleingriff der bevorstehende kritische Fahrzustand erkannt wird und an wenigstens einem Rad, an dem ein zukünftiger Regeleingriff erwartet wird, ein geringer Vorbereitungs-Bremsdruck aufgebaut wird, kann die Reaktionsgeschwindigkeit der angesprochenen Bremse wesentlich erhöht werden. Diese Maßnahme bewirkt somit, dass das Bremssystem schon "vorgespannt" ist und hat den wesentlichen Vorteil, dass die Ansprechzeit des Bremssystems auf eine Stellanforderung wesentlich kürzer ist und folglich das Fahrzeug besser stabilisiert werden kann.

Das Bevorstehen einer kritischen Fahrsituation (in der ein Regeleingriff erfolgt) kann grundsätzlich aus allen Zustandsgrößen abgeleitet werden, aus denen sich allein oder in Kombination ein Hinweis auf einen bevorstehenden Regeleingriff ergibt. Eine kurz bevorstehende kritische Fahrsituation kann beispielsweise dadurch erkannt werden, dass die Giergeschwindigkeit stark zunimmt, d.h. der Gradient der Giergeschwindigkeit einen vorgegebenen Schwellenwert überschreitet und/oder die Regelabweichung der Giergeschwindigkeit einen vorgegebenen Schwellenwert überschreitet (der niedriger ist als die Anregelschwelle für den eigentlichen Stabilisierungseingriff). Ein kurz bevorstehender Regeleingriff kann auch durch Auswertung und Überwachung anderer charakteristischer Fahr-Zustandsgrößen, wie z.B. der Querbeschleunigung bzw. deren Änderung, der Lenkgeschwindigkeit, etc., erkannt werden.

Das erfindungsgemäße Aufbringen eines Vorbereitungs-Bremsdrucks findet Abwendung bei hochdynamischen Spurwechselmanövern, wie z.B. bei sogenannten Fishhook-Manövern, RER-Manövern (Road Edge Recovery) oder dem sogenannten VDA-Test (Elchtest). Diese Manöver zeichnen sich dadurch aus, dass innerhalb kurzer Zeit ein erstes Lenkmanöver, mit dem das Fahrzeug aus der Spur ausgelenkt, und ein zweites Lenkmanöver, mit dem das Fahrzeug durch Gegenlenken wieder in die ursprüngliche Fahrtrichtung (jedoch seitlich versetzt) ausgerichtet wird, stattfinden. Dabei kommt es häufig nach dem zweiten Lenkmanöver zum Schleudern des Fahrzeugs. Erfindungsgemäß wird es daher vorgeschlagen, das während des ersten Lenkmanövers kurveninnere Vorderrad, noch bevor die Lenkung die Ausgangsstellung (d.h. die Lenkradstellung, bevor das erste Lenkmanöver eingeleitet wurde) überschritten hat, mit Vorbereitungs-Bremsdruck zu beaufschlagen. Während des zweiten Lenkmanövers bildet das ursprünglich kurveninnere Vorderrad dann das kurvenäußere Vorderrad, an dem nun die eigentliche Schlupfregelung stattfindet.

Das vorbereitende Beaufschlagen der Bremse des kurveninneren Vorderrads hat den Nachteil, dass während des ersten Lenkmanövers ein zusätzliches übersteuerndes Giermoment auf das Fahrzeug wirkt. Es ist daher sinnvoll, den Vorbereitungs-Bremsdruck nur so stark bzw. schwach einzustellen, dass das Fahrverhalten nicht zu stark beeinträchtigt wird. Der wesentliche Vorteil dieser vorbereitenden Maßnahme besteht jedoch darin, dass das Fahrzeug nach dem zweiten Lenkmanöver wesentlich schneller wieder stabilisiert werden kann, da die Vorderradbremse bereits vorgespannt ist.

Bei einem hochdynamischen Spurwechselmanöver wird der Vorbereitungs-Bremsdruck vorzugsweise unter der Bedingung aufgebaut, dass die Querbeschleunigung des Fahrzeugs betragsmäßig groß ist und die Lenkgeschwindigkeit kleiner Null ist (d.h. eine Lenkbewegung in Richtung der Neutralstellung stattfindet) und einen vorgegebenen Schwellenwert unterschreitet. Die Lenkgeschwindigkeit ist hier als zeitliche Änderung des Lenkwinkels definiert, wobei sie negativ ist, wenn der Betrag des Lenkwinkels abnimmt, und positiv, falls der Betrag des Lenkwinkels zunimmt.

Dynamische Spurwechselmanöver zeichnen sich vor allem durch sehr schnelle, kurz aufeinanderfolgende Lenkmanöver aus und können somit z.B. dadurch erkannt werden, dass innerhalb einer vorgegebenen Zeit ein erstes Lenkmanöver, das bezüglich der Querdynamik des Fahrzeugs eine erste Bedingung erfüllt, und ein zweites Lenkmanöver in Gegenrichtung stattfindet, das eine zweite Bedingung erfüllt. Die zugehörigen Schwellenwerte, z.B. für die Querbeschleunigung, die Änderung der Querbeschleunigung oder die Lenkgeschwindigkeit, sind dabei vorzugsweise so gesetzt, dass zwischen einem Spurwechsel im Rahmen eines Überholmanövers und einem Spurwechsel aufgrund einer kritischen Fahrsituation unterschieden werden kann.

Die Funktion zum Aufbringen des Vorbereitungs-Bremsdrucks wird vorzugsweise deaktiviert, wenn eine vorgegebene Bedingung erfüllt ist, z.B. die Fahrdynamikregelung einen Bremseneingriff anfordert und den Bremsdruck an ausgewählten Rädern erhöht. Die Funktion kann z.B. auch deaktiviert werden, wenn über einen vorgegebenen Zeitraum nur langsame Lenkbewegungen stattfinden, d.h. der Betrag der Lenkgeschwindigkeit während einer vorgegebenen Zeit kleiner ist als ein vorgegebener Schwellenwert.

Eine weitere Ausschaltbedingung für den Vorbereitungs-Bremsdruck kann z.B. darin bestehen, dass der Vorbereitungs-Bremsdruck länger als eine vorgegebene Zeitdauer aufrecht erhalten wurde, ohne dass ein Regeleingriff der Fahrdynamikregelung erfolgt wäre.

Die Erfindung wird nachstehend anhand der beigefügten Zeichnungen beispielhaft näher erläutert. Es zeigen:
Fig. 1 eine schematische Blockdarstellung eines bekannten Fahrdynamikregelungssystems;
Fig. 2 ein Flussdiagramm zur Darstellung der wesentlichen Verfahrensschritte zum Aufbau eines Vorbereitungs-Bremsdrucks;
Fig. 3 verschiedene Phasen während eines Spurwechselmanövers; und
Fig. 4 den Verlauf des Bremsdrucks an verschiedenen Rädern des Fahrzeugs während eines Spurwechselmanövers.

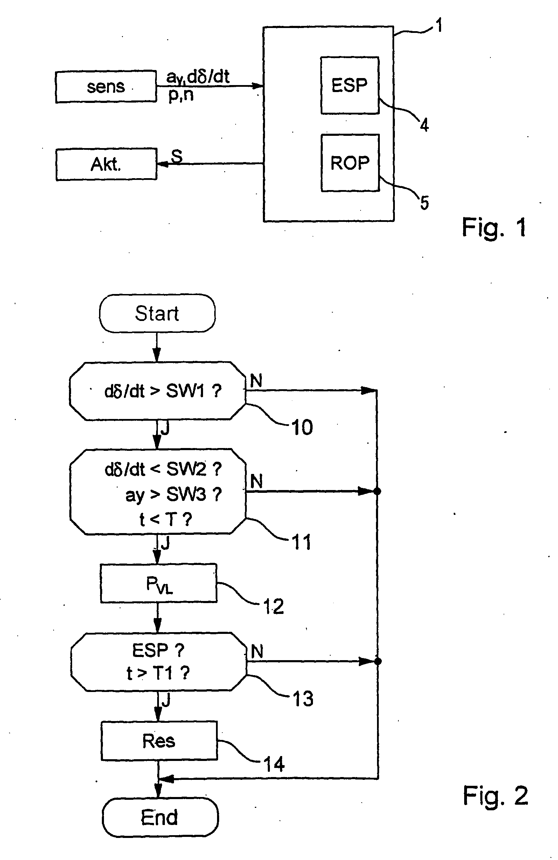

Fig. 1 zeigt eine schematische Darstellung eines Fahrdynamikregelungssystems 1-5. Dieses umfasst eine Sensorik zur Aufnahme verschiedener Fahrzustandsgrößen, aus denen das Istverhalten des Fahrzeugs ermittelt wird. Sämtliche Sensoren des Systems sind dabei in einem Block 2 zusammengefasst.

Dieser umfasst z.B. einen Querbeschleunigungssensor, Raddrehzahlsensoren zur Fahrgeschwindigkeitsbestimmung, einen Lenkradsensor, einen Bremsdrucksensor etc.. Das Fahrdynamikregelungssystem umfasst ferner ein Steuergerät 1, in dem verschiedene Regelalgorithmen hinterlegt sein können. Im vorliegenden Beispiel umfasst das Regelungssystem einen Algorithmus ESP 4 zur Giergeschwindigkeitsregelung und einen Algorithmus ROP 5 (Roll-Over-Protection), mit dem die maximale Querbeschleunigung des Fahrzeugs begrenzt wird, um ein Umkippen des Fahrzeugs zu verhindern.

In einer kritischen Fahrsituation, in der das Fahrzeug übersteuert oder um eine Längsachse zu kippen droht, berechnen die Regelalgorithmen 4 bzw. 5 ein Ausgleichs-Giermoment, um das Fahrzeug zu stabilisieren. Das erforderliche Ausgleichs-Giermoment wird mittels der Radbremsen 3 an ausgewählten Rädern ausgeübt, wobei eine Schlupfregelung durchgeführt wird.

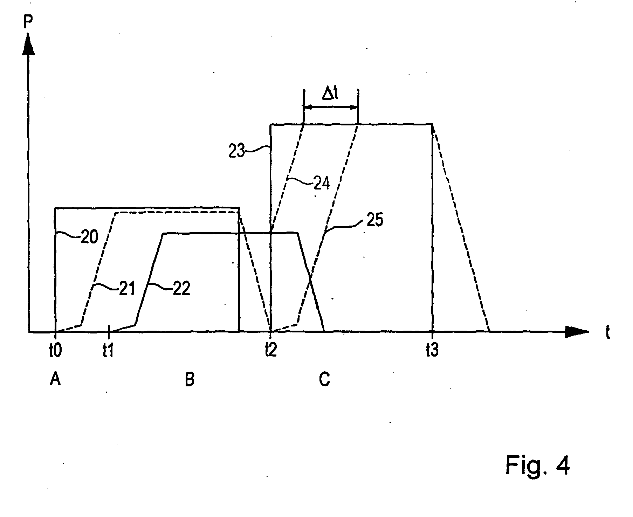

Zur Einstellung des vorgegebenen Soll-Bremsdrucks bzw. Soll-Bremsmoments steuert das Steuergerät 1 eine Hydraulikpumpe und verschiedene Ventile (nicht gezeigt) im Bremssystem 3 an. Um eine Verzögerung durch das Hochlaufen der Hydraulikpumpe und das Befüllen der Bremse mit Bremsflüssigkeit zu vermeiden, wird bereits vor dem eigentlichen Regeleingriff ein Vorbereitungs-Bremsdruck 22 (siehe Fig. 4) an derjenigen Radbremse ausgeübt, an der ein zukünftiger Regeleingriff erwartet wird. Durch diese Vorsteuermaßnahme ist das Bremssystem bereits "vorgespannt" und kann im Regelfall wesentlich schneller reagieren und das gewünschte Soll-Bremsmoment einstellen.

Der Vorbereitungs-Bremsdruck ist vorzugsweise derart bemessen, dass das Fahrzeug durch den Vorbereitungs-Bremsdruck nicht maßgeblich in seinem Fahrverhalten beeinflusst wird. Der Vorbereitungs-Bremsdruck kann je nach Fahrzeugtyp z.B. Werte zwischen 20 und 50 bar annehmen.

Der Vorbereitungs-Bremsdruck kann beispielsweise in einer Kurvenfahrt, in der das Fahrzeug übersteuert, oder bei einem Spurwechselmanöver, wie z.B. einem Fishhook-Manöver, einem VDA-Test (Elchtest) oder einem RER-Manöver vorsorglich aufgebaut werden.

Das Aktivieren und Deaktivieren des Vorbereitungs-Bremsdrucks bei einem Spurwechselmanöver wird im Folgenden anhand von Fig. 2 beispielhaft näher erläutert.

Fig. 2 zeigt die wesentlichen Verfahrensschritte einer Fahrdynamikregelung mit vorgezogenem Druckaufbau an wenigstens einem ausgewählten Rad bei einem Spurwechselmanöver. Dynamische Spurwechselmanöver zeichnen sich durch zwei kurz aufeinanderfolgende Lenkbewegungen aus, mit denen das Fahrzeug in einem ersten Lenkmanöver zunächst aus der Spur ausgelenkt und dann mittels eines zweiten Lenkmanövers zurück in die ursprüngliche Fahrtrichtung ausgerichtet wird. Insbesondere nach dem zweiten Lenkmanöver kann es dabei zum Übersteuern und Schleudern des Fahrzeugs kommen.

Um eine solche Fahrsituation zu erkennen, wird in Schritt 10 zunächst überprüft, ob die Lenkgeschwindigkeit dδ/dt größer Null ist und einen vorgegebenen Schwellenwert SW1 überschreitet. Ist dies der Fall (J) deutet dies auf eine sehr schnelle, heftige Lenkbewegung hin, die sich von einem üblichen Überholmanöver unterscheidet.

In Schritt 11 wird dann überprüft, ob innerhalb einer vorgegebenen Zeit T ein weiteres Lenkmanöver in Gegenrichtung durchgeführt wird (Abfrage t<T). Außerdem wird überprüft, ob das zweite Lenkmanöver vorgegebene Bedingungen bezüglich der Querdynamik des Fahrzeugs erfüllt. Eine dieser Bedingungen ist, dass die Querbeschleunigung ay einen vorgegebenen Schwellenwert SW3 überschreitet. Die andere Bedingung besteht darin, dass die Lenkgeschwindigkeit dδ/dt kleiner Null ist (d.h. eine Lenkbewegung in Richtung der Neutralstellung durchgeführt wird) und einen Schwellenwert SW2 unterschreitet.

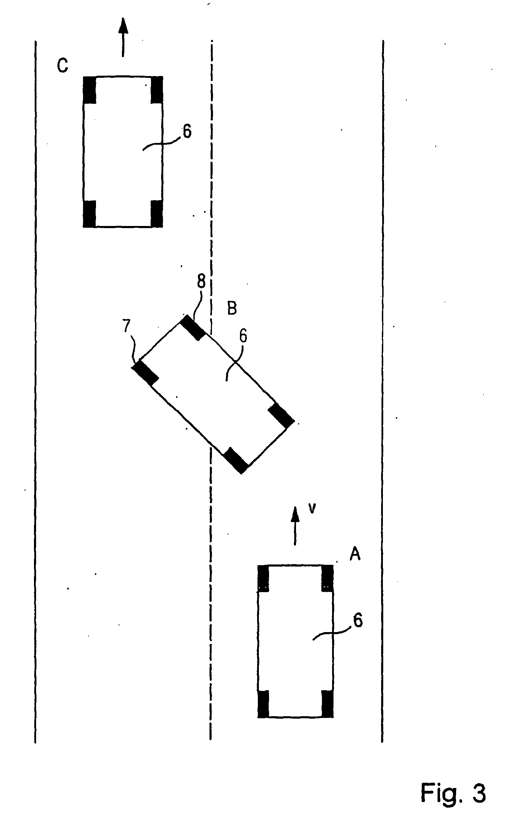

Sofern das zweite Lenkmanöver innerhalb der vorgegebenen Zeit T stattfindet (Fall J) wird in Schritt 12 der Vorbereitungs-Bremsdruck an demjenigen Rad aufgebaut, an dem ein Regeleingriff der Fahrdynamikregelung erwartet wird. Dies ist in Fig 3 das linke Vorderrad 7. Falls die Aktivierungsbedingungen von Block 11 nicht erfüllt sind (N) endet die Prozedur.

Nach dem Aufbauen des Vorbereitungs-Bremsdrucks werden in Block 13 verschiedene Deaktivierungsbedingungen überprüft. Ist eine der Deaktivierungsbedingungen erfüllt, wird die Funktion wieder deaktiviert. Eine mögliche Deaktivierungsbedingung besteht darin, dass das ESP einen Regeleingriff anfordert und z.B. die Hydraulikpumpe entsprechend ansteuert. Sofern innerhalb einer vorgegebenen Zeitdauer T1 kein Regeleingriff erfolgt, wird der Vorbereitungs-Bremsdruck wieder abgebaut.

Ist eine der Ausschaltbedingungen von Block 13 erfüllt, wird in Block 14 die Vorbereitungs-Bremsfunktion zurückgesetzt. Die Prozedur ist damit beendet.

Fig. 3 zeigt verschiedene Phasen eines Fahrzeugs während eines Spurwechselmanövers. In der Phase A fährt das Fahrzeug 6 mit einer Geschwindigkeit v in Geradeausfahrt auf der rechten Fahrspur. Ausgehend von dieser Fahrsituation lenkt der Fahrer ruckartig nach links auf die andere Fahrspur. Dabei wird eine Regelschwelle des ROP- oder ESP-Algorithmus überschritten, so dass das Steuergerät 1 ein Ansteuersignal 20 (siehe Fig. 4) für die Radbremse des rechten Vorderrads 8 ausgibt. Wegen der Trägheit des Bremssystems baut sich der tatsächliche Bremsdruck (Signal 21; Fig. 4) erst nach einer systemimmanenten Verzögerungszeit auf.

Noch vor Erreichen des dargestellten Fahrzustands B beginnt der Fahrer gegenzulenken, wobei die in Block 12 genannten Auslösebedingungen bezüglich der Querbeschleunigung ay und der Lenkgeschwindigkeit dδ/dt erfüllt werden. Zum Zeitpunkt t1 (Fig. 4) wird daher am linken Vorderrad 7 ein Vorbereitungs-Bremsdruck 22 mit geringem Pegel aufgebaut.

Nach Überschreiten des Fahrzustands B steuert das Fahrzeug 6 in eine Rechtskurve, in der zum Zeitpunkt t2 die Regelschwelle der Fahrdynamikregelung (ROP oder ESP) überschritten wird und das Regelungssystem eine Druckaufbau-Anforderung 23 für die Radbremse des linken Vorderrades 7 ausgibt, um das Fahrzeug 6 zu stabilisieren. Da das Bremssystem 3 bereits vorgespannt ist, kann diese Anforderung innerhalb kürzester Zeit umgesetzt werden (siehe Druckverlauf 24). Ohne den vorsorglichen Druckaufbau am linken Vorderrad 7 wäre der geforderte Soll-Bremsdruck erst eine Zeit Δt verzögert an der linken vorderen Radbremse 7 angelegen (siehe Druckverlauf 25). Die Reaktionszeit des Fahrdynamikregelungssystems hat sich somit um eine Zeitspanne Δt verbessert. Dadurch kann ein Fahrzeug wesentlich früher abgefangen und stabilisiert werden, was insbesondere bei hochdynamischen Manövern die Fahrsicherheit wesentlich erhöht.

### Bezugszeichenliste

- 1: Steuergerät
- 2: Sensorik
- 3: Bremssystem
- 4: ESP-Algorithmus
- 5: ROP-Algorithmus
- 6: Fahrzeug
- 7: Linkes Vorderrad
- 8: Rechtes Vorderrad
- 10-14: Verfahrensschritte
- 20: ROP- bzw. ESP-Druckvorgabe vorne rechts
- 21: Tatsächlicher Druckverlauf vorne rechts
- 22: Vorbereitungs-Bremsdruck vorne links
- 23: ROP- bzw. ESP-Druckvorgabe vorne links
- 24: Tatsächlicher Druckverlauf vorne links mit Vorbereitungs-Bremsdruck
- 25: Tatsächlicher Druckverlauf vorne links ohne Vorbereitungs-Bremsdruck
- t0-t3: Zeitpunkte
- A,B,C: Fahrzustände
- V: Fahrzeuggeschwindigkeit
- ay: Querbeschleunigung
- dδ/dt: Lenkgeschwindigkeit
- S: Steuersignal

## Patentansprüche

1. Verfahren zum Stabilisieren eines Fahrzeugs (6) in kritischen Fahrsituationen, bei dem eine kritische Fahrsituation mittels einer Sensorik (2) erkannt wird und ein Regelalgorithmus (4,5) unter einer vorgegebenen Bedingung mittels eines Bremssystems (3) in den Fahrbetrieb des Fahrzeugs (6) eingreift, wobei an einer Radbremse eines Rades (7), an dem in Kürze ein Stabilisierungseingriff (23) erwartet wird, bereits vor dem Stabilisierungseingriff (23) ein Vorbereitungs-Bremsdruck (22) mit geringem Pegel aufgebaut wird,
wobei der Vorbereitungs-Bremsdruck (22) während eines Spurwechselmanövers aufgebaut wird, bei dem innerhalb einer vorgegebenen Zeit (T) ein erstes Lenkmanöver und ein zweites Lenkmanöver in Gegenrichtung stattfinden, wenn bei dem zweiten Lenkmanöver die Querbeschleunigung (a_{y}) größer ist als ein vorgegebener Schwellenwert (SW3) und die Lenkgeschwindigkeit einen Schwellenwert (SW2) unterschreitet,
**dadurch gekennzeichnet, dass** der Vorbereitungs-Bremsdruck (22) am während des ersten Lenkmanövers kurveninneren Vorderrad aufgebaut wird, noch bevor die Lenkung die Ausgangsstellung, d.h. diejenige Lenkradstellung, bevor das erste Lenkmanöver eingeleitet wurde, erreicht.

2. Verfahren nach Anspruch 1, **dadurch gekennzeichnet, dass** die Fahrzeugquerbeschleunigung (a_{y}) und die Lenkgeschwindigkeit (dδ/dt) ermittelt und schwellenwertüberwacht werden und der Vorbereitungs-Bremsdruck (22) aufgebaut wird, wenn die Fahrzeugquerbeschleunigung (a_{y}) einen vorgegebenen Schwellenwert (SW3) überschreitet und die Lenkgeschwindigkeit (dδ/dt) einen vorgegebenen Schwellenwert (SW2) unterschreitet.

3. Verfahren nach Anspruch 2, **dadurch gekennzeichnet, dass** das erste Lenkmanöver eine Querbeschleunigung (a_{y}) und eine Lenkgeschwindigkeit (dδ/dt) aufweisen, die jeweils einen vorgegebenen Schwellenwert (SW3, SW1) überschreiten.

4. Verfahren nach einem der vorhergehenden Ansprüche, **dadurch gekennzeichnet, dass** die Funktion zum Aufbau eines Vorbereitungs-Bremsdrucks (22) deaktiviert wird, wenn eine vorgegebene Deaktivierungsbedingung (14) erfüllt ist.

5. Verfahren nach Anspruch 4, **dadurch gekennzeichnet, dass** die Deaktivierungsbedingung ein Signal (S) des Regelalgorithmus (4,5) ist, mit dem ein Bremseneingriff angefordert wird.

6. Verfahren nach Anspruch 4, **dadurch gekennzeichnet, dass** die Deaktivierungsbedingung darin besteht, dass die Änderung des Lenkwinkels (dδ/dt) über eine vorgegebene Zeit (T1) kleiner ist als ein vorgegebener Schwellenwert.

7. Fahrdynamikregelungssystem zum Stabilisieren eines Fahrzeugs (6) in kritischen Fahrsituationen, mit einem Steuergerät (1), in dem ein Fahrdynamikregelungsalgorithmus (4,5) hinterlegt ist, einer Sensorik (2) zum Aufnehmen verschiedener den Fahrzustand beschreibender Größen (a_{y},dδ/dt,v), und einem Bremssystem (3) zum Durchführen eines Stabilisierungseingriffs, wobei das Steuergerät (1) eine Radbremse eines Rades (7), an dem in Kürze ein Stabilisierungseingriff (23) erwartet wird, bereits vor dem Stabilisierungseingriff (23) ansteuert und einen Vorbereitungs-Bremsdruck (22) mit geringem Pegel aufbaut,
wobei der Vorbereitungs-Bremsdruck (22) während eines Spurwechselmanövers aufgebaut wird, bei dem innerhalb einer vorgegebenen Zeit (T) ein erstes Lenkmanöver und ein zweites Lenkmanöver in Gegenrichtung stattfinden, wenn bei dem zweiten Lenkmanöver die Querbeschleunigung (a_{y}) größer ist als ein vorgegebener Schwellenwert (SW3) und die Lenkgeschwindigkeit einen Schwellenwert (SW2) unterschreitet,
**dadurch gekennzeichnet, dass** der Vorbereitungs-Bremsdruck (22) am während des ersten Lenkmanövers kurveninneren Vorderrad aufgebaut wird, noch bevor die Lenkung die Ausgangsstellung, d.h. diejenige Lenkradstellung, bevor das erste Lenkmanöver eingeleitet wurde, erreicht.

## Claims

1. Method for stabilizing a vehicle (6) in critical driving situations, in which a critical driving situation is detected by means of a sensor system (2), and a control algorithm (4, 5) intervenes in the driving operation of the vehicle (6) by means of a brake system (3) when a predefined condition is met, wherein before the stabilization intervention (23) a preparatory brake pressure (22) with a low level is already brought about at a wheel brake of a wheel (7) at which a stabilization intervention (23) is anticipated within a short time,
wherein the preparatory brake pressure (22) is brought about during a lane changing manoeuvre during which a first steering manoeuvre and a second steering manoeuvre take place in opposing directions within a predefined time (T) if, during the second steering manoeuvre, the lateral acceleration (a_{y}) is higher than a predefined threshold value (SW3) and the steering speed drops below a threshold value (SW2),
**characterized in that** the preparatory brake pressure (22) is brought about at the front wheel on the inside of the bends during the first steering manoeuvre, even before the steering reaches the home position, i.e. that position of the steering wheel before the first steering manoeuvre was initiated.

2. Method according to Claim 1, **characterized in that** the lateral acceleration (a_{y}) of the vehicle and the steering speed (dδ/dt) are determined and monitored for threshold values, and the preparatory brake pressure (22) is brought about if the lateral acceleration (a_{y}) of the vehicle exceeds a predefined threshold value (SW3), and the steering speed (dδ/dt) drops below a predefined threshold value (SW2).

3. Method according to Claim 2, **characterized in that** the first steering manoeuvre has a lateral acceleration (a_{y}) and a steering speed (dδ/dt) which respectively exceed a predefined threshold value (SW3, SW1).

4. Method according to one of the preceding claims, **characterized in that** the function for bringing about a preparatory brake pressure (22) is deactivated if a predefined deactivation condition (14) is met.

5. Method according to Claim 4, **characterized in that** the deactivation condition is a signal (S) of the control algorithm (4, 5) with which a braking intervention is requested.

6. Method according to Claim 4, **characterized in that** the deactivation condition consists in the change in the steering angle (dδ/dt) over a predefined time (T1) being less than a predefined threshold value.

7. Driving dynamics control system for stabilizing a vehicle (6) in critical driving situations, having a control unit (1) in which a driving dynamics control algorithm (4, 5) is stored, a sensor system (2) for recording different variables (a_{y}, dδ/dt, v) which describe the driving state, and a brake system (3) for carrying out a stabilization intervention, wherein before the stabilization intervention (23) the control unit (1) already actuates a wheel brake of a wheel (7) at which a stabilization intervention (23) is anticipated within a short time, and brings about a preparatory brake pressure (22) with a low level,
wherein the preparatory brake pressure (22) is brought about during a lane changing manoeuvre during which a first steering manoeuvre and a second steering manoeuvre take place in opposing directions within a predefined time (T) if, during the second steering manoeuvre, the lateral acceleration (a_{y}) is higher than a predefined threshold value (SW3) and the steering speed drops below a threshold value (SW2),
**characterized in that** the preparatory brake pressure (22) is brought about at the front wheel on the inside of the bends during the first steering manoeuvre, even before the steering reaches the home position, i.e. that position of the steering wheel before the first steering manoeuvre was initiated.

## Revendications

1. Procédé de stabilisation d'un véhicule (6) dans des situations de conduite critiques, avec lequel une situation de conduite critique est identifiée au moyen d'un dispositif de détection (2) et un algorithme de régulation (4, 5) intervient sous une condition prédéfinie dans le mode de conduite du véhicule (6) au moyen d'un système de freinage (3), une pression de freinage préparatoire (22) de faible niveau étant déjà appliquée avant une intervention de stabilisation (23) à un frein de roue d'une roue (7) au niveau de laquelle est attendue sous peu l'intervention de stabilisation (23), la pression de freinage préparatoire (22) étant établie pendant une manoeuvre de changement de voie, au cours de laquelle une première manoeuvre de changement de direction et une deuxième manoeuvre de changement de direction en sens inverse ont lieu pendant une durée (T) prédéfinie, lorsque l'accélération transversale (a_{y}) au cours de la deuxième manoeuvre de changement de direction est supérieure à une valeur de seuil (SW3) prédéfinie et la vitesse de changement de direction est inférieure à une valeur de seuil (SW2), **caractérisé en ce que** la pression de freinage préparatoire (22) est établie au niveau de la roue avant qui se trouve à l'intérieur de la courbe lors de la première manoeuvre de changement de direction avant que la direction n'atteigne la position initiale, c'est-à-dire la position qu'avait le volant avant d'entamer la première manoeuvre de changement de direction.

2. Procédé selon la revendication 1, **caractérisé en ce que** l'accélération transversale du véhicule (a_{y}) et la vitesse de changement de direction (dδ/dt) sont déterminées et surveillées par rapport à des valeurs de seuil et la pression de freinage préparatoire (22) est établie lorsque l'accélération transversale du véhicule (a_{y}) devient supérieure à une valeur de seuil (SW3) prédéfinie et la vitesse de changement de direction (dδ/dt) devient inférieure à une valeur de seuil (SW2) prédéfinie.

3. Procédé selon la revendication 2, **caractérisé en ce que** la première manoeuvre de changement de direction présente une accélération transversale (a_{y}) et une vitesse de changement de direction (dδ/dt) qui dépassent respectivement une valeur de seuil (SW3, SW1) prédéfinie.

4. Procédé selon l'une des revendications précédentes, **caractérisé en ce que** la fonction d'établissement d'une pression de freinage préparatoire (22) est désactivée lorsqu'une condition de désactivation prédéfinie (14) est remplie.

5. Procédé selon la revendication 4, **caractérisé en ce que** la condition de désactivation est un signal (S) de l'algorithme de régulation (4, 5) avec lequel est demandée une intervention de freinage.

6. Procédé selon la revendication 4, **caractérisé en ce que** la condition de désactivation consiste **en ce que** la modification de l'angle de changement de direction (dδ/dt) pendant une durée donnée (T1) soit inférieure à une valeur de seuil prédéfinie.

7. Système de régulation dynamique de la conduite pour stabiliser un véhicule (6) dans des situations de conduite critiques, comprenant un module de commande (1) qui contient un algorithme de régulation dynamique de la conduite (4, 5), un dispositif de détection (2) destiné à enregistrer différentes grandeurs (a_{y}, dδ/dt, v) qui décrivent la situation de conduite et un système de freinage (3) pour réaliser une intervention de stabilisation, le module de commande (1) commandant déjà avant l'intervention de stabilisation (23) un frein de roue d'une roue (7) au niveau de laquelle est attendue sous peu l'intervention de stabilisation (23) et établissant une pression de freinage préparatoire (22) de faible niveau, la pression de freinage préparatoire (22) étant établie pendant une manoeuvre de changement de voie, au cours de laquelle une première manoeuvre de changement de direction et une deuxième manoeuvre de changement de direction en sens inverse ont lieu pendant une durée (T) prédéfinie, lorsque l'accélération transversale (a_{y}) au cours de la deuxième manoeuvre de changement de direction est supérieure à une valeur de seuil (SW3) prédéfinie et la vitesse de changement de direction est inférieure à une valeur de seuil (SW2), **caractérisé en ce que** la pression de freinage préparatoire (22) est établie au niveau de la roue avant qui se trouve à l'intérieur de la courbe lors de la première manoeuvre de changement de direction avant que la direction n'atteigne la position initiale, c'est-à-dire la position qu'avait le volant avant d'entamer la première manoeuvre de changement de direction.
